Europäisches Patentamt

European Patent Office

Office européen des brevets

(11) Numéro de publication: **0 043 767
B1**

# (12) FASCICULE DE BREVET EUROPEEN

(45) Date de publication du fascicule du brevet: **23.10.85**

(51) Int. Cl.⁴: **G 21 C 1/02**

(21) Numéro de dépôt: **81401062.5**

(22) Date de dépôt: **01.07.81**

(54) **Réacteur nucléaire refroidi par un métal liquide.**

(30) Priorité: **04.07.80 FR 8014963**

(43) Date de publication de la demande:
**13.01.82 Bulletin 82/02**

(45) Mention de la délivrance du brevet:
**23.10.85 Bulletin 85/43**

(84) Etats contractants désignés:
**BE CH DE GB IT LI NL SE**

(56) Documents cités:
**DE-A-1 815 046
DE-A-2 217 863
DE-A-2 346 868
DE-A-2 535 378
DE-B-1 297 778
GB-A-2 017 387**

(73) Titulaire: **ELECTRICITE DE FRANCE Service National
2, rue Louis Murat
F-75008 Paris (FR)**

(72) Inventeur: **Brachet, Alain
34, Avenue Saint Laurent - Bât.4
F-91400 Orsay (FR)**

(74) Mandataire: **Mongrédien, André et al
c/o BREVATOME 25, rue de Ponthieu
F-75008 Paris (FR)**

Courier Press, Leamington Spa, England.

EP 0 043 767 B1

## Description

La présente invention a pour objet un nouveau type de réacteur nucléaire refroidi par un métal liquide et, plus précisément, une nouvelle conception du circuit primaire de ces réacteurs.

La présente invention a également pour objet une pompe de circulation primaire et un échangeur de chaleur conçus pour être utilisés dans un tel réacteur.

De façon connue, les réacteurs nucléaires refroidis par un métal liquide, généralement du sodium, comportent un ou plusieurs circuits caloporteurs primaires, à sodium liquide, qui extraient la chaleur du coeur fissile du réacteur. Chaque circuit caloporteur primaire transfère ensuite cette chaleur à un ou plusieurs échangeurs de chaleur placés entre ce circuit caloporteur primaire et un ou plusieurs circuits caloporteurs secondaires ou intermédiaires à sodium liquide. Chaque circuit intermédiaire alimente un générateur de vapeur dont le fluide secondaire est de l'eau qui, après vaporisation, actionne un turbo-alternateur.

On a envisagé dans une variante de supprimer les circuits de sodium secondaires. Dans ce cas, le sodium du circuit primaire alimente directement le primaire d'un ou plusieurs générateurs de vapeur.

On remarquera dès à présent que l'invention peut s'appliquer indifféremment à l'une ou l'autre des deux variantes qui viennent d'être mentionnées. A cet effet, il convient d'indiquer que, dans la suite de la description, l'expression "échangeur de chaleur" désignera indifféremment un échangeur de chaleur entre les circuits primaires et secondaires dans la première variante et un générateur de vapeur constituant un type particulier d'échangeur de chaleur entre le circuit primaire et le circuit eau/vapeur dans la deuxième variante.

Si l'on considère maintenant exclusivement la conception du ou des circuits primaires dans les réacteurs nucléaires refroidis par sodium liquide, on peut distinguer dans l'état actuel de la technique deux types distincts de circuits primaires qui sont généralement désignés respectivement par les expressions "circuit intégré" et "circuit à boucles".

Lorsque le circuit caloporteur primaire est du type intégré, l'ensemble du circuit primaire est contenu dans une cuve appelée cuve principale, obturée par une dalle et remplie presque en totalité de sodium surmontée par une atmosphère de gaz neutre tel que de l'argon maintenue à un pression légérement supérieure à la pression atmosphèrique. En plus du coeur du réacteur qui est logé dans une cuve, dite cuve interne, définissant dans la cuve principale un collecteur chaud et un collecteur froid, tous les appareils constituant le circuit primaire, et notamment les pompes primaires de circulation et les échangeurs sont submergés en permanence par le sodium contenu dans la cuve.

Cette conception intégrée présente plusieurs avantages, notamment sous l'angle de la sûreté, puisqu'elle assure par exemple un excellent confinement des matières radioactives, une grande inertie thermique et un fonctionnement hydraulique relativement simple. Cependant, elle présente certains inconvénients qui ont tous pour conséquence un coût élevé d'investissement. Parmi ces inconvénients, on citera notamment:

l'existence d'un volume important d'espaces morts à l'intérieur de la cuve principale, dont on tire évidemment profit pour augmenter les inerties thermiques, mais qui contribue à engendrer un surcoût;

le processus de construction et de montage rendu très complexe par le fait qu'il faut emboîter successivement les composants les uns dans les autres, de sorte que tout retard sur la fabrication de l'un d'entre eux peut se répercuter sur l'ensemble sans qu'il soit possible d'y remédier aisément;

le fait que le sodium soit, d'une manière générale, peu ou pas guidé ou canalisé à l'intérieur de la cuve pose de difficiles problèmes de thermo-hydraulique qui se traduisent par des problèmes de tenue mécanique dont la solution conduit à mettre en place des baffles thermiques particulièrement coûteux;

une optimisation rigoureuse de dimensionnement géométrique de la cuve principale est extrêmement difficile à réaliser car elle est tributaire de nombreux paramètres tels que l'encombrement du coeur ou de la cuve primaire, la diamètre, le nombre et même la masse des composants tels que les pompes et les échangeurs, de telle sorte que des espaces morts peuvent être créés par un mauvaise utilisation de la place disponible pour le coeur ou la cuve primaire;

la perte de charge des échangeurs conduit à une monté du niveau de sodium dans la cuve primaire lors du fonctionnement du réacteur, qui s'ajoute à la hauteur de sodium au-dessus du coeur nécessaire à la manutention sous sodium du combustible pour accroître la hauteur de la cuve principale, ce qui nécessite une augmentation de la longueur de tous les appareils suspendus à la dalle de fermeture (échangeurs, pompes, couvercle d'instrumentation du coeur, dispositifs de manutention, barres de commande, etc.) augmentant encore le coût du réacteur;

le dimensionnement des échangeurs primaires est particulièrement délicat, et donc coûteux, notamment par le fait qu'il doit satisfaire de nombreuses exigences contradictoires puisque, comme on vient de la voir, sa perte de charge au primaire, qui se répercute sur la hauteur de la cuve principale, doit être faible (en pratique limitée à environ 2 m de sodium), sa longueur étant par ailleurs liée à la hauteur de la cuve et son diamètre devant être aussi réduit que possible afin de ne pas trop pénaliser le diamètre de la cuve principale. La limitation de la perte de charge au primaire de l'appareil conduit notamment à réduire la vitesse du sodium primaire à l'intérieur de la virole externe de l'échangeur, à écarter les tubes et à ne pas utiliser de chicanes, ce qui conduit en dépit des bonnes propriétés de transfert thermique du sodium à une efficacité amoindrie. De plus, l'écoulement du sodium primaire à l'intérieur de l'échangeur étant lent et à faible perte de charge, l'alimentation en sodium n'est pas homogène et il en résulte des disparités sensibles entre les températures de sortie des divers tubes en fonction de leurs positions, ce qui complique les calculs de tenue mécanique. L'ensemble de ces effets se combine pour finalement accroître le coût des échangeurs;

les pompes mécaniques à surfaces libres sont également des composants très coûteux, à la fois pour les raisons précédentes et pour des raisons spécifiques parmi lesquelles on peut citer le fait que la pression absolue minimale requise à l'aspiration pour éviter la cavitation est faible, ce qui conduit à définir une faible vitesse de rotation et une roue de grand diamètre. Les pompes sont donc lourdes et coûteuses;

en cas d'incident sur une boucle secondaire nécessitant sa mise hors service, l'interruption de la circulation du sodium primaire dans le ou les échangeurs intermédiaires correspondants qui doit alors être effectuée afin de pouvoir continuer à exploiter le réacteur à puissance réduite nécessite l'utilisation de systèmes complexes et coûteux d'obturation des fenêtres d'entrée de ces échangeurs;

ce type de réacteur se prête mal à la suppression des circuits intermédiaires mentionnés précédemment, car on envisage difficilement la possibilité d'intégrer les générateurs de vapeur dans la cuve du réacteur notamment parce qu'ils constituent des composants beaucoup plus volumineux que les échangeurs intermédiaires.

Dans une variante des réacteurs du type intégré, on a envisagé d'utiliser une cuve primaire cylindrique qui présente en elle-même de nombreux avantages. Cependant, la configuration cylindrique de la cuve primaire complique la liaison hydraulique entre cette cuve et l'échangeur ainsi que la conception de cet échangeur lui-même. Ces inconvénients atténuent en définitive l'intérêt intrinsèque de cette variante, notamment sous l'angle de la réduction du coût qu'elle pourrait permettre.

Dans les réacteurs nucléaires refroidis par métal liquide du type dit "à boucles", les composants tels que les échangeurs intermédiaires et les pompes de circulation primaire sont disposés à l'extérieur de la cuve principale du réacteur et communiquent avec cette dernière par des tuyauteries de liaison définissant des boucles fermées. Une telle conception présente certains avantages qui consistent notamment en la suppression ou la réduction de certains inconvénients du circuit intégré, par exemple, ceux résultant d'un confinement rapproché des composants et d'une construction et d'un montage très imbriqués de ces composants. Il apparaît toutefois que ces avantages sont eux-mêmes tempérés d'autres inconvénients dont certains sont très pénalisants, de sorte qu'il n'est pas assuré que la variante à boucles permette une réduction de coût par rapport à la variante intégrée. Parmi ces inconvénients, on citera notamment:

la nécessité de concevoir et de construire un réseau étendu et complexe de tuyauteries de grand diamètre muni de double enveloppes pour lesquelles certaines sollicitations (séismes) sont très contraignantes;

compte tenu de faible volume de la cuve du réacteur et afin d'éviter, à l'arrêt de l'installation, de noyer la dalle de fermeture ou de dénoyer exagérément le coeur, on est conduit à disposer les composants pompes et échangeurs ainsi que leurs tuyauteries de liaison au voisinage immédiat d'un même plan horizontal. En fonctionnement on est alors amené à réguler les niveaux et les pressions de gaz dans deux ou trois réservoirs en série: la cuve du réacteur, la pompe et éventuellement l'échangeur s'il comporte une surface libre. A chaque changement de régime hydraulique, les régulations précédentes doivent être effectuées:

ce type de réacteur présente un risque non négligeable d'entraînement d'une bulle de gaz à partir d'une surface libre et d'injection de cette bulle dans la coeur, ce qui pourrait entraîner des conséquences thermiques et neutroniques particulièrement dommageables:

le caractère très réduit des volumes des collecteurs chaud et froid définis à l'intérieur de la cuve principale respectivement à la sortie et à l'entrée du coeur du réacteur conduisent à des chocs thermiques beucoup plus sévères que dans le cas des réacteurs intégrés ou, ce qui n'est pas trés satisfaisant sous l'angle de la sûreté, à la nécessité de provoquer un ralentissement forcé des pompes en cas de transitoire thermique;

la partie haute pression du circuit primaire (liaison pompe/coeur ou liaison pompe/échangeur/coeur selon la position de la pompe par rapport à l'échangeur) n'est pas doublement confinée comme dans les réacteurs intégrés, de telle sorte qu'en cas de brèche sur cette portion du circuit et malgré la double enveloppe, les conséquences peuvent être très néfastes:

le choix de la position respective de la pompe et de l'échangeur ne trouve pas de solution totalement satisfaisant car, si la pompe est placée sur la branche froide du circuit et refoule directement dans le coeur, on est conduit à pressuriser sensiblement le ciel du réacteur et celui de l'échangeur pour maintenir à la pompe une pression du gaz de couverture au moins egale à la pression atmosphérique, ce qui ne présente que des inconvénients, et si la pompe est placée dans une branche chaude, elle est soumise à une température plus élevée et voit sont coût accru par suite notamment de conditions de calcul mécanique plus sévères et de choix plus restreint des matériaux de structure. De plus, dans cette seconde disposition, si le ciel du réacteur peut être alors à une pression voisine de la pression atmosphérique comme celui de la pompe, en revanche, l'échangeur est sous haute pression (une dizaine de bars) car il est situé au refoulement direct de la pompe sous une pression qui represente la somme des pertes de charge de l'échangeur et du coeur. La pression élevée régnant au primaire de l'échangeur doit en outre être répercutée sur le circuit secondaire si l'on veut être assuré qu'en cas de brèches de la surface d'échange de l'échangeur il y ait pénétratoin du sodium secondaire dans le sodium primaire et non l'inverse. Une telle pression de service au niveau de l'échangeur a des répercussions sur le dimensionnement mécanique et donc sur le coût à la fois des boucles primaires et des boucles secondaires, y compris l'échangeur. Elles augmentent les risques de fuites de sodium et rendent celles-ci beaucoup plus dangereuses (feux de sodium pulvérisés et non en nappes);

en cas d'indisponibilité d'une boucle secondaire, il faut prévoir un isolement de la ou des boucles primaires correspondantes qui nécessite l'emploi de vannes en sodium de grand diamètre particulièrement coûteuses et dont le fonctionnement ou le blocage intempestif constitue un risque d'arrêt partiel ou même total du débit dans le coeur. De plus, la mise hors service d'une boucle primaire met également hors service une pompe, ce qui n'est pas le cas dans le système intégré;

le refroidissement à l'arrêt du réacteur est difficile à réaliser car le circuit hydraulique doit alors soit emprunter les boucles extérieures qui peuvent être défaillantes pour des raisons diverses lors de leur arrêt, soit se refermer par l'intérieur même de la cuve du réacteur, ce qui est relativement complexe en raison de l'exiguité de cette cuve.

Un réacteur à boucles présentant la plupart de ces inconvénients est illustré par le document DE—A—2 535 378, qui représente un réacteur a neutrons rapides comportant des pompes situées à l'intérieur de la cuve contenant le coeur, et des échangeurs placés hors de cette cuve.

Dans le cas des réacteurs à boucles, et dans la variante selon laquelle les boucles secondaires seraient supprimées, on a égaleemnt envisagé de réaliser un circuit primaire dans lequel les pompes seraient intégrées au générateur de vapeur. Cependent, si une telle conception apporte certains avantages de compacité et de moindre élongation des tuyauteries, elle conserve de nombreux inconvénients tels que la nécessité de pressuriser le ciel du réacteur, la faible valeur de la pression absolue à l'aspiration des pompes, l'existence d'une tuyauterie à haute pression non doublement confinée, etc.

La présente invention a pour objet la réalisation d'un réacteur nucléaire refroidi par un métal liquide présentant une noüvelle disposition du circuit primaire qui conserve les principaux avantages de la variante intégrée en écartant la plupart des inconvénients du circuit à boucles et en présentant certaines caractéristiques propres qui constituent des avantages supplémentaires à ceux des systèmes intégrés et à boucles pris isolément. En résumé, la présente invention a donc pour objet la réalisation d'un nouveau type de réacteur nucléaire refroidi par un métal liquide permettant de réduire sensiblement le coût d'investissement par rapport aux réacteurs intégrés et aux réacteurs à boucles.

A cet effet et conformément à la présente invention, il est proposé un réacteur nucléaire refroidi par un métal liquide, comprenant une cuve principale obturée par une dalle de fermeture, ladite cuve contenant du métal liquide surplombé par une couverture de gaz inerte, le coeur du réacteur étant placé dans une cuve primaire intégrée dans la cuve principale, de telle. sorte que la cuve primaire constitue à la sortie du coeur un collecteur chaud pour le métal liquide et que l'espace défini entre la cuve principale et la cuve primaire constitue un collecteur froid pour le métal liquide, àu moins un échangeur de chaleur alimenté par le métal liquide contenu dans le collecteur chaud sous l'action d'au moins une pompe primaire disposée dans la cuve principale, ledit échangeur est situé hors de la cuve principale et communiquant avec le collecteur chaud par au moins une canalisation d'entrée et avec le collecteur froid, par au moins une canalisation de sortie, ce réacteur étant caractérisé en ce que ledit échangeur est entièrement situé à un niveau supérieur à celui de la dalle de fermeture, de telle sorte que l'échangeur et lesdites canalisations sont totalement vidangeables par gravité dans la curve principale, la partie supérieure de chaque échangeur étant remplie par une couverture de gaz inerte qui communique avec la couverture de gaz inerte de la cuve principale par au moins une canalisation d'équilibrage de pression de gaz dans laquelle est disposée au moins une vanne fermée en fonctionnement normal, la couverture de gaz inerte de la cuve principale étant pressurisée de telle sorte que ledit échangeur est rempli de métal liquide par contre-pression, l'ouverture de ladite vanne commandant la vidange de l'échangeur et des canalisations d'entrée et de sortie correspondantes dans la cuve principale. Dans la suite du texte, on dénommera circuits extérieurs, l'ensemble constitué par ledit échangeur et lesdites canalisations.

La cuve primaire présente de préférence un bord supérieur situé au-dessus des niveaux de métal liquide dans les collecteurs chaud et froid lorsque la ou lesdites vannes sont fermées, et le niveau du métal liquide dans la cuve principale est situé au-dessus du bord supérieur lorsque le ou les échangeurs sont vidangés simultanément par ouverture de la ou desdites vannes, de façon à permettre une circulation du métal liquid interne à la cuve principale à travers la coeur puis, entre les collecteurs chaud et froid, communiquant alors par le dessus du bord supérieur de la cuve primaire, soit par circulation naturelle, soit avec l'aide d'une au moins des pompes de circulation.

De façon connue, le réacteur nucléaire selon l'invention peut comprendre au moins un échangeur de refroidissement à l'arrêt. Conformément à une caractéristique secondaire de l'invention, cet échangeur est disposé de préférence dans le collecteur froid à un niveau supérieur au niveau de métal liquide dans ce collecteur lorsque les circuits extérieurs sont pleins de métal liquide et à un niveau inférieur au niveau de métal liquide dans la cuve principale lorsque les circuits extérieurs sont vides de métal liquide.

Selon une autre caractéristique secondaire de l'invention, la ou les pompes primaires sont disposées dans le collecteur froid à un niveau supérieur au niveau de métal liquide dans ce collecteur lorsque les circuits extérieurs sont pleins de métal liquide et à un niveau inférieur au niveau de métal liquide dans la cuve principale lorsque les circuits extérieurs sont vides de métal liquide.

La ou les pompes primaires peuvent alors présenter chacune une tuyauterie d'aspiration qui plonge dans le métal liquide contenu dans le collecteur froid et une tuyauterie de refoulement qui débouche dans un sommier portant le coeur du réacteur. Afin d'éviter toute entrée de gaz dans les tuyauteries en cas de brèces dans la tuyauterie de refoulement ou dans la tuyauterie d'aspiration, cette dernière est disposée de préférence à l'intérieur de la tuyauterie de refoulement sur toute la hauteur comprise entre la pompe correspondante et le niveau de métal liquide dans le collecteur froid lorsque les circuits extérieurs sont pleins de métal liquide et lorsque les pompes fonctionnent.

La ou les pompes primaires peuvent également présenter chacune une tuyauterie d'aspiration qui débouche dans la canalisation de sortie de l'échangeur correspondant et une tuyauterie de refoulement qui débouche dans un sommier portant le coeur du réacteur, ladite tuyauterie d'aspiration ne présentant aucun point haut. Cette caractéristique permet d'éviter à une bulle de gaz de couverture de s'accumuler dans une pompe à l'arrêt lorsque celle-ci est dénoyée en fonctionnement normal. En effet, elle permet à une bulle de gaz pénétrant dans la pompe de s'échapper dans l'échangeur. Elle a aussi pour conséquence que le débit de sodium principal ne transite pas par le collecteur froid lors du fonctionnement normal du réacteur.

Selon une autre caractéristique secondaire de l'invention, la ou les pompes primaires sont à aspiration par le haut, et au moins une tuyauterie de dérivation met en communication la tuyauterie de refoulement avec la partie supérieure de la pompe afin de définir dans cette dernière un tampon de métal liquide par prélèvement d'un petit débit de métal liquide dans la tuyauterie de refoulement.

Cette caractéristique permet d'éviter la formation d'une bulle de gaz dans les pompes lorsqu'elles sont dénoyées en fonctionnement. De préférence, la tuyauterie de dérivation débouche dans la partie supérieure de la pompe à un niveau supérieur au niveau minimal de la surface libre du tampon de métal liquide contenu dans la pompe et elle débouche dans la tuyauterie de refoulement à un niveau inférieur à celui du métal liquide dans la cuve principale lorsque les circuits extérieurs sont pleins et lorsque les pompes sont arrêtées.

Selon une autre caractéristique secondaire de l'invention et afin de réduire autant que possible la longueur des tuyauteries externes à la cuve principale, le ou les échangeurs comprennent une virole externe dans laquelle est disposé un faisceau de tubes dans lequel circule un fluide secondaire, la canalisation d'entrée correspondant pénétrant dans l'échangeur à l'extrémité inférieure de ce dernier et débouchant dans la virole externe à proximité de l'extrémité supérieure du faisceau de tubes.

Dans un mode de réalisation particulier de l'invention, le ou les échangeurs de chaleur ainsi que les canalisations d'entrée et de sortie sont équipés au moins en partie d'une double enveloppe définissant un espace intermédiaire rempli de gaz inerte, ledit espace intermédiaire communiquant avec la couverture de gaz inerte de la cuve principale.

Selon un autre mode de réalisation, cet espace intermédiaire communique avec un espace défini entre la cuve principale et une cuve de sécurité doublant de façon connue la cuve principale à l'extérieur de celle-ci.

On décrira maintenant, à titre d'exemple non limitatif, différents modes de réalisation de l'invention en se référant aux dessins annexés dans lesquels:

la figure 1 est une vue en coupe schématique d'un premier mode de réalisation du circuit primaire d'un réacteur nucléaire refroidi par un métal liquide réalisé conformément à la présente invention.

la figure 2 est une vue en coupe comparable à la figure 1 illustrant un second mode de réalisation du réacteur selon l'invention qui diffère notamment du premier mode de réalisation de la figure 1 par la disposition des pompes de circulation primaires, par l'implantation des échangeurs de refroidissement du réacteur à l'arrêt, et par le mode de récupération du sodium en cas de brèches dans la première enveloppe de la partie du circuit primaire externe à la cuve principale.

la figure 3 est une vue de dessus schématique illustrant une possibilité d'implantation particulièrement avantageuse des pompes de circulation primaires et des échangeurs du réacteur selon l'invention,

la figure 4 est une vue en coupe longitudinale agrandie d'une pompe de circulation primaire particulièrement adaptée pour être utilisée dans le réacteur selon l'invention en position dénoyée lors du fonctionnement normal du réacteur,

la figure 5 est une vue en coupe schématique comparable aux figures 1 et 2 illustrant une autre variante de réalisation de l'invention comportant notamment une tuyauterie de dérivation supplémentaire assurant une liaison directe entre l'échangeur et la pompe de circulation primaire, dans la cas où celle-ci est dénoyée en fonctionnement normal,

la figure 6 est une vue en coupe schématique d'une pompe à aspiration par le bas pouvant être utilisée dans le réacteur selon l'invention, cette pompe étant alimentée par une tuyauterie d'aspiration qui est entourée par la tuyauterie de refoulement dans toute sa partie située au-dessus du niveau de sodium lors du fonctionnement normal du réacteur, et

la figure 7 est une vue en coupe schématique d'un échangeur de chaleur particulièrement adapté pour être utilisé dans le réacteur nucléaire selon l'invention, cet échangeur étant alimenté en sodium primaire par une tuyauterie pénétrant par le bas de l'échangeur et intégrée à ce dernier.

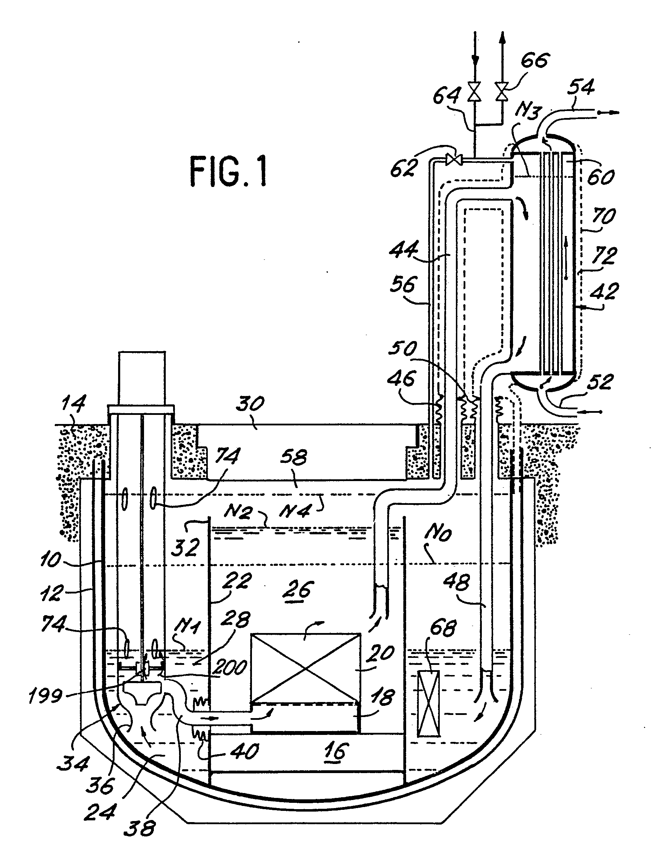

Comme l'illustre schématiquement la figure 1, le réacteur nucléaire selon l'invention comprend, de la même manière que les réacteurs de type intégré refroidis par un métal liquide, une cuve principale 10 doublée en totalité vers l'extérieur par une cuve de sécurité 12, les cuves 10 et 12 étant obturées par une dalle de fermeture 14 assurant également leur supportage dans la variante représentée. Les cuves 10 et 12 présentent de préférence une symétrie cylindrique et la cuve 10 supporte également de façon connue un platelage 16 reposant sur le fond de la cuve 10 et assurant par l'intermédiaire d'un sommier 18 le supportage du coeur 20 du réacteur. Ce dernier contient les assemblages fissiles, les assemblages fertiles et la protection neutronique comme dans les réacteurs refroidis par un métal liquide de type connu.

Le coeur 20 du réacteur est logé à l'intérieur d'une cuve interne ou cuve primaire 22, cylindrique dans le mode de réalisation représenté, qui sépare le sodium 24 contenu dans la cuve principale 10 en un collecteur chaud 26 situé immédiatement au-dessus du coeur du réacteur et un collecteur froid 28 formé par l'espace annulaire défini entre la cuve interne 22 et la cuve principale 10. Toujours de façon connue, la dalle de fermeture 14 présente au-dessus du coeur du réacteur une ouverture obturée par un ou plusieurs bouchons tournants 30 supportant le couvercle d'instrumentation du coeur, le dispositif de manutention du combustible et les barres de commande (non représentés). La cuve interne 22, qui est supportée par le platelage 16 dans la variante représentée, définit à son extrémité supérieure un bord libre 32 disposé à une certaine distance en dessous de la dalle 14.

Comme dans les réacteurs du type intégré, la dalle 14 supporte plusieurs pompes 34, dont l'une seulement est représentée sur la figure 1. Les pompes 34, sont disposées dans l'espace défini entre la cuve interne 22 et la cuve principale 10 et plongent dans le sodium liquide 28 dans la variante représentée sur la figure 1. Elles peuvent être constituées par des pompes d'une quelconque type connu et, notamment, par des pompes mécaniques à aspiration par la bas ou par le haut. Chaque pompe 34 prélève le sodium liquide froid contenu dans le collecteur 28 au moyen d'une tuyauterie d'aspiration 36 qui plonge à sa partie inférieure dans le sodium 24. Ce dernier est refoulé vers le sommier 18, qui assure également l'alimentation de coeur 20 en sodium primaire par une tuyauterie de refoulement 38 qui traverse la cuve interne 22 par l'intermédiaire d'un dispositif d'étanchéité 40.

Conformément à la présente invention, le réacteur représenté sur la figure 1 se distingue des réacteurs intégrés par le fait que les échangeurs de chaleur 42 sont disposés à l'extérieur de la cuve principale 10 et, plus précisément, en totalite au-dessus de la dalle 14. Ces échangeurs 42, qui peuvent être d'un quelconque type connu, reçoivent le sodium primaire en provenance du collecteur chaud 26 par un tuyauterie d'entrée 44 qui plonge dans le collecteur chaud 26, traverse la dalle 14 par l'intermédiaire d'un dispositif d'étanchéité 46, et pénètre dans la virole externe de l'échangeur 42 à la partie supérieure de celui-ci. Dans l'échangeur 42, le sodium primaire céde les calories qu'il véhicule, soit au sodium secondaire dans le cas où les échangeurs 42 constituent des échangeurs intermédiaires, soit à l'eau du circuit eau/vapeur dans le cas où les échangeurs 42 constituent des générateurs de vapeur.

Le sodium secondaire ou l'eau circule de façon connue de bas en haut dans un faisceau de tubes entre un orifice d'entré 52 et un orifice de sortie 54. Le sodium primaire refroidi est ensuite acheminé vers le collecteur froid 28 par une tuyauterie de sortie 48 qui débouche à la partie inférieure de la virole externe de l'échangeur 42, traverse la dalle 14 par l'intermédiaire d'un dispositif d'étanchéité 50, puis plonge dans le collecteur 28.

Une canalisation 56 d'équilibrage de pression de gaz met en communication la couverture de gaz inerte 58 ou ciel du réacteur surplombant le sodium 24 à l'intérieur de la cuve principale 10, avec une poche ou couverture de gaz inerte 60 définie à la partie supérieure de chacun des échangeurs 42 au-dessus du sodium. Dans une variante (non représentée), la poche de gaz inerte 60 de chacun des échangeurs 42 peut être constituée par un réservoir indépendant de l'échangeur et relié à ce dernier en point haut par une courte tuyauterie jouant le rôle de purge ou d'évent. La tuyauterie 56 est normalement obturée par une ou plusieurs vannes 62. Une tuyauterie 64 débouche dans la tuyauterie 56 entre la vanne 62 et la couverture 60 de chacun des échangeurs 42 ou directement dans la couverture 60 et elle permet par l'intermédiaire de vannes 66 appropriées d'admettre ou de rejeter le gaz de couverture, généralement constitué par de l'argon.

Afin que le niveau libre $N_3$ du sodium dans chaque échangeur 42 soit atteint même à l'arrêt des pompes 34, les vannes 62 sont normalement fermées et on établit une différence de pression de gaz entre la couverture 58 du réacteur et les poches de gaz 60 des echangeurs.

Cette différence de pression équilibre exactement la dénivellation du sodium entre le niveau $N_3$ du sodium dans les échangeurs et le niveau de référence $N_0$ du sodium dans la cuve principale à l'arrêt des pompes 34. Ainsi, si la pression des poches de gaz 60 des échangeurs est voisine et, de préférence, légèrement supérieure à la pression atmosphérique comme c'est généralement le cas, la pression de la couverture de gaz 58 du réacteur doit être sensiblement plus élevée que la pression atmosphérique (par exemple, 1,5 à 2 bars relatifs, selon l'écart entre les niveaux libres $N_3$ et le niveau libre $N_0$). De plus, on voit sur la figure 1 que le niveau libre $N_0$ est sensiblement inférieur à celui du bord supérieur 32 de la cuve interne 22 et, en conséquence, à celui de la dalle de fermeture 14. Cet abaissement du niveau $N_0$ est destiné, d'une part, à tenir compte de la remontée du niveau de sodium dans le collecteur chaud 26 lorsque les pompes 34 fonctionnent et, d'autre part, à garder à l'intérieur de la cuve principale 10 un volume libre suffisant pour recevoir la totalité du sodium du circuit primaire lors de l'arrêt du réacteur comme on le verra par la suite.

En effet, lors de la mise en route des pompes 34, les niveaux libres du sodium dans le collecteur chaud 26 et dans le collecteur froid 28 s'éloignent de leur position initiale $N_0$ en raison de la perte de charge de l'ensemble du circuit extérieur (échangeur 42, tuyauterie d'entrée 44 et tuyauterie de sortie 48). Le niveau libre $N_2$ du sodium dans le collecteur chaud 26 devient ainsi supérieur au niveau de référence $N_0$ alors que le niveau libre $N_1$ du sodium dans le collecteur froid devient inférieur à ce niveau de référence. Cependant, comme on l'a indiqué précé-demment, le niveau $N_2$ du sodium dans le collecteur chaud reste inférieur à celui du rebord 32 de la cuve primaire 22 lorsque toutes les pompes 34 fonctionnent, afin d'éviter l'établissement d'une lame déversante court-circuitant en partie les échangeurs 42. A l'inverse, le niveau $N_1$ du sodium dans le collecteur froid 28 ne doit pars être trop bas afin de permettre un noyage du débouché de chaque tuyauterie de sortie 48 suffisant pour éviter une agitation trop grande de la surface libre du sodium dans ce collecteur. Pour la même raison, le niveau $N_0$ du sodium dans la cuve 10 à l'arrêt des pompes 34, qui doit bien entendu être suffisant pour noyer totalement le coeur 20, doit également permettre un noyage suffisant de l'embouchure de chacune des tuyauteries d'entrée 44 afin d'assurer une circulation correcte du sodium dès la mise en route des pompes 34, ou par thermosiphon.

On remarquera que la mise en route des pompes 34 tend à faire varier le niveau $N_3$ du sodium dans les échangeurs. Pour maintenir ce niveau, il faut donc soutirer ou injecter du gaz dans la poche de gaz 60 de chaque échangeur 42. Toutefois, si l'on se réfère aux valeurs couramment admises pour les pertes de charge des tuyauteries, on constate que les variations du niveau $N_3$ sont très réduites entre la situation d'arrêt du débit et celle de pleine charge. Les volumes de gaz à injecter ou à soutirer des poches de gaz 60 sont donc faibles, à l'inverse de ce que l'on constate dans les réacteurs à boucles. En effet, la liberté de mouvement des niveaux de sodium $N_1$ et $N_2$ dans les collecteurs froid et chaud du réacteur selon l'invention assure une autorégulation du niveau $N_3$ des surfaces libres de sodium dans les échangeurs 42. Ainsi, lorsque l'on passe de l'état de marche à l'état d'arrêt des pompes 34, la baisse naturelle du niveau $N_2$ de sodium dans le collecteur chaud 26 tend à atténuer la variation du niveau $N_3$ de sodium dans les échangeurs. Le réacteur selon l'invention est donc aisé à réguler, au contraire d'un réacteur à boucles.

On remarquera également que la dénivellation entre les échangeurs 42 et le coeur 20 du réacteur selon l'invention permet d'assurer dans d'excellentes conditions un refroidissement du coeur 20 par convection naturelle lorsque les pompes sont à l'arrêt. En effet, la dénivellation entre la source chaude que constitue le coeur et la source froide que constitue chaque échangeur est beaucoup plus importante que dans les réacteurs intégrés ou à boucles connus.

Conformément à une autre caractéristique de l'invention, l'ensemble des circuits extérieurs que constituent les parties des tuyauteries d'entrée 44 et de sortie 48 externes à la cuve principale 10 et les échangeurs 42 est vidangeable par gravité dans la cuve principale 10 du réacteur. A cet effet, les tuyauteries 44 et 48 ne présentent aucune contre-pente ou point de rétention susceptible de piéger le sodium. Grâce à cette caractéristique, il est possible de vidanger totalement les circuits extérieurs dans la cuve principale du réacteur en ouvrant simultanément toutes les vannes 62, ce qui a pour effet de rétablir l'équilibre des pressions entre la couverture de gaz inerte 58 et les poches de gaz inerte 60. Une telle vidange peut notamment être effectuée lors d'un arrêt de longue durée du réacteur correspondant à une période d'entretien ou de manutention du combustible ou lorsqu'un incident tel qu'une défaillance totale du circuit eau/vapeur conduit à la perte des moyens de refroidissement normaux.

La vidange des circuits extérieurs a pour conséquence d'élever le niveau du sodium dans la cuve principale 10 jusqu'à un niveau $N_4$ situé au-dessus du niveau du bord libre 32 de la cuve interne 22, afin qu'une circulation de sodium puisse s'établir à l'intérieur de la cuve principale, comme c'est le cas en fonctionnement normal dans un réacteur intégré. L'évacuation de la puissance résiduelle du réacteur s'effectue alors de façon connue au moyen d'échangeurs sodium/ sodium de refroidissement du réacteur à l'arrêt. L'un de ces échangeurs est représenté schématiquement en 68 sur la figure 1. La structure de ces échangeurs est bien connue des spécialistes de la technique, notamment dans les réacteurs du type intégré, de sorte qu'ils ne seront pas décrits ici en détail. On remarquera simplement que, dans le mode de réalisation de la figure 1, les échangeurs 68 sont disposés dans le collecteur froid 28 en dessous du niveau $N_1$ de sodium correspondant au fonctionnement normal du réacteur.

La circulation du sodium à l'intérieur de la cuve principale peut alors être obtenue au moyen des pompes 34, qui sont utilisées à vitesse modérée afin de limiter la lame déversante au-dessus du bord 32 de la cuve primaire et en raison du fait que la perte de charge du circuit hydraulique est réduite par rapport à celle qui correspond au fonctionnement normal. L'écoulement du sodium liquide à l'intérieur de la cuve principale 10 nécessaire au refroidissement du réacteur à l'arrêt peut également s'effectuer sans intervention des pompes 34 par effet de thermo-siphon. En effet, la réduction de la perte de charge du circuit lors du refroidissement du réacteur à l'arrêt facilite l'établissement d'un refroidissement du coeur en thermo-siphon. C'est un avantage dont ne disposent ni les réacteurs intégrés, ni les réacteurs à boucles.

La manutention interne des assemblages combustibles sous sodium à l'intérieur de la cuve principale 10, qui s'effectue comme on l'a vu après vidange des circuits extérieurs, nécessite de façon connue que la distance entre le niveau $N_4$ du sodium dans la cuve principale et la face supérieure du coeur 20 soit supérieure à la hauteur d'un assemblage. Cette opération de manutention du combustible peut s'effectuer après dépressurisation de la couverture de gaz inerte 58. Cette manutention, qui nécessite en général des interventions sur l'étanchéité du confinement, s'effectue alors dans des conditions aussi favorables que dans les réacteurs intégrés (grande cuve pleine de sodium, surmontée d'un ciel de gaz à basse pression évitant tout risque d'éjection de sodium vers l'atmosphère). Le surplus de gaz peut être stocké provisoirement dans les réservoirs de stockage du sodium primaire alors vides de sodium, et non représentés sur la figure 1.

Afin que le refroidissement à l'arrêt du réacteur soit encore possible même en cas de percement de la cuve principale 10 et de remplissage en sodium de l'espace intercuve défini entre les cuves 10 et 12, le niveau de sodium $N_4$ ne doit pas autant que possible s'abaisser en dessous du bord supérieur 32 de la cuve primaire. Toutefois, cette condition peut ne pas être respectée si l'on prévoit à cet effet un orifice approprié dans la cuve primaire 10, qui met en communication le collecteur chaud 26 et le collecteur froid 28 sans déversement au-dessus de la cuve primaire. Un tel orifice (non représenté) est bien connu des spécialistes et désigné généralement sous la terme de "bonde".

De façon connue dans les réacteurs à boucles, le circuit extérieur, s'est-à-dire la partie extérieure des tuyauteries d'entrée 44 de sortie 48 et la virole externe des échangeurs 42 sont munies d'une double enveloppe 70 destinée à parer à une fuite éventuelle de sodium intervenant dans le circuit extérieur en fonctionnement normal. Dans la variante de réalisation de la figure 1, l'espace annulaire 72 défini par cette double enveloppe est avantageusement relié à l'espace intercuve défini entre les cuves 10 et 12. Cette liaison est réalisée aisément sans point bas ni contre-pente puisque tel est déjà le cas pour les circuits extérieurs de sodium, de sorte que toute fuite du circuit extérieur est drainée vers l'espace intercuve et n'a pas besoin d'être défalquée dans l'évaluation d'un abaissement du niveau de sodium $N_4$ résultant d'une brèche dans la cuve principale 10. Cette disposition est particulièrement avantageuse par rapport aux réacteurs à boucles dans lesquels, le drainage n'étant pas possible, la condition correspondante est plus sévère et donc plus coûteuse à réaliser.

Si l'on se réfère aux caractéristiques couramment admises pour les échangeurs (volume de sodium primaire contenu), pour les tuyauteries (diamètre et longueur), pour les pertes de charge de ces composants et enfin pour les dimensions du coeur, on constate que les contraintes géométriques auxquelles il a été fait allusion en présentant les réacteurs connus de type intégré sont aisément vérifiés dans le réacteur selon l'invention. On dispose même d'une plus grande latitude dans le choix de la perte de charge de l'échangeur qui, au lieu d'être limitée à environ 2 m de sodium comme dans les réacteurs intégrés, peut être augmentée. Dans ces conditions, l'échangeur est beaucoup plus facile à dimensionner et à optimiser et son coût peut être réduit. De plus, l'augmentation de la perte de charge des échangeurs n'a pas d'incidence sur les conditions de refroidissement du réacteur à l'arrêt puisque les échangeurs sont alors mis hors circuit.

La position surélevée des échangeurs 42 permet également d'isoler aisément un ou plusieurs d'entre eux en ouvrant simplement la ou les vannes 62 correspondantes. Une telle isolation peut notamment être rendue nécessaire par l'indisponibilité d'une boucle secondaire. Cette opération est donc beaucoup plus facile à réaliser que dans les réacteurs connus où elle nécessite l'utilisation de dispositifs complexes et coûteux tels que les obturateurs des fenêtres d'entrée des échangeurs dans les réacteurs intégrés, ces obturateurs devant être manoeuvrés à distance et que les vannes en sodium de grandes dimensions utilisées dans les réacteurs à boucles. Bien entendu, dans le réacteur suivant l'invention, la vidange d'un ou plusieurs échangeurs 42 entraîne une surélévation des niveaux $N_1$ et $N_2$ du sodium dans les collecteurs froid et chaud. Cependant, les contraintes géométriques évoquées plus haut n'empêchent pas alors d'extraire une puissance significative à l'aide des échangeurs 42 qui demeurent en service. Pour un nombre de boucles secondaires identiques, le réacteur selon l'invention fournit dans ces conditions une puissance identique à celles que peuvent fournir les réacteurs intégrés ou à boucles connus.

Dans le réacteur selon l'invention, la pressurisation de la couverture de gaz inerte 58 permet d'accroître la vitesse de rotation des pompes, de diminuer le diamètre de leurs roues et de diminuer leur encombrement en plan, notamment au droit de la traversée de la dalle 14. Etant donné que cette amélioration des performances des pompes n'est pas obtenue par un allongement de leurs arbres de commande, il en résulte une diminution du coût unitaire des pompes.

En outre, les pompes étant moins lourdes et les échangeurs n'étant plus supportés par la dalle, celli-ci est beaucoup moins chargée que dans les réacteurs intégrés. De plus, sa structure présente moins de trous de grande section nécessaires au passage des composants. La structure assurant la tenue mécanique et, éventuellement, l'épaisseur de la dalle 14 sont donc moins importantes que dans le système intégré, de telle sorte que le coût de la dalle est diminué.

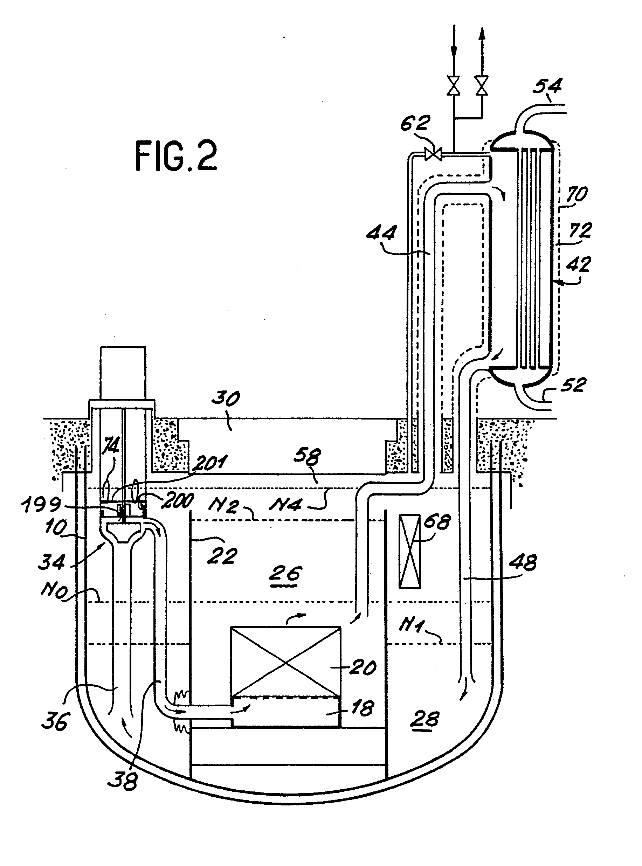

Si l'on se réfère maintenant à la figure 2, qui illustre de façon schématique un autre mode de réalisation de l'invention reprenant les caractéristiques essentielles du mode de réalisation de la figure 1, on voit que les échangeurs 68 de refroidissement du réacteur à l'arrêt peuvent être avantageusement disposés à un niveau aussi élevé que possible, mais inférieur au niveau $N_4$, dans l'espace annulaire défini entre la cuve interne 22 et la cuve principale 10. Cette disposition, qui crée une dénivellation entre le coeur 20 du réacteur (source chaude) et les échangeurs 68 (source froide) favorise l'établissement d'un thermo-siphon à l'intérieur de la cuve principale 10 du réacteur lorsque les circuits extérieurs ont été vidangés dans cette cuve. Cette caractéristique s'ajoute à la réduction de la perte de charge du circuit lors du refroidissement du réacteur à l'arrêt pour faciliter l'établissement d'un refroidissement du coeur en thermo-siphon, après arrêt des pompes 34. Elle permet aussi de dénoyer les échangeurs 68 en fonctionnement normal, c'est-à-dire de les placer au-dessus du niveau $N_1$ du sodium dans le collecteur froid 28. Les échangeurs 68 sont ainsi pratiquement calorifugés par la couverture de gaz inerte 58, et protégés de transitoires thermiques normaux.

Le mode de réalisation de la figure 2 diffère également du mode de réalisation de la figure 1 par le fait que l'espace 72 défini par la double enveloppe 70 du circuit extérieur communique directement avec la couverture de gaz inerte 58, de telle sorte que les dispositifs d'étanchéité 46 et 50 (figure 1) sont supprimés. Dans cette variante, toute brèche dans le circuit de sodium primaire extérieur se traduit par une entrée de gaz dans le sodium de ce circuit et non pas par une fuite de métal liquide vers l'extérieur de ce circuit. En effet, une pression de gaz supérieure à celle du sodium circulant dans les tuyauteries d'entrée 44 et de sortie 48 règne en permanence dans l'espace 72. Cette entrée de gaz a pour conséquence avantageuse la vidange automatique du sodium du circuit externe défaillant vers la cuve principale 10.

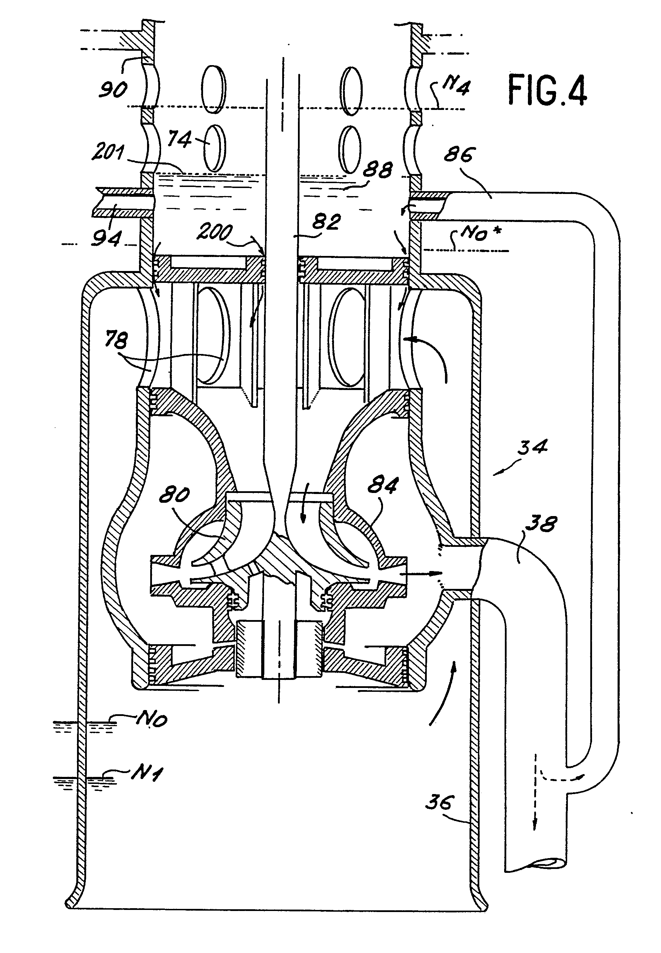

Enfin, le mode de réalisation de la figure 2 se distingue du mode de réalisation de la figure 1 par le fait que les pompes 34 sont dénoyées en fonctionnement normal, c'est-à-dire qu'elles sont disposées au-dessus du niveau $N_1$ du sodium liquide dans le collecteur froid et même au-dessus du niveau $N_0$ du référence correspondant à l'arrêt des pompes. La tuyauterie d'aspiration 36 de chacune des pompes plonge alors dans le sodium contenu dans le collecteur froid 28 comme l'illustre la figure 2. Certains caractéristiques secondaires de l'invention particulièrement adaptées à une telle disposition des pompes 34 seront décrites par la suite en se référant aux figures 4 à 6.

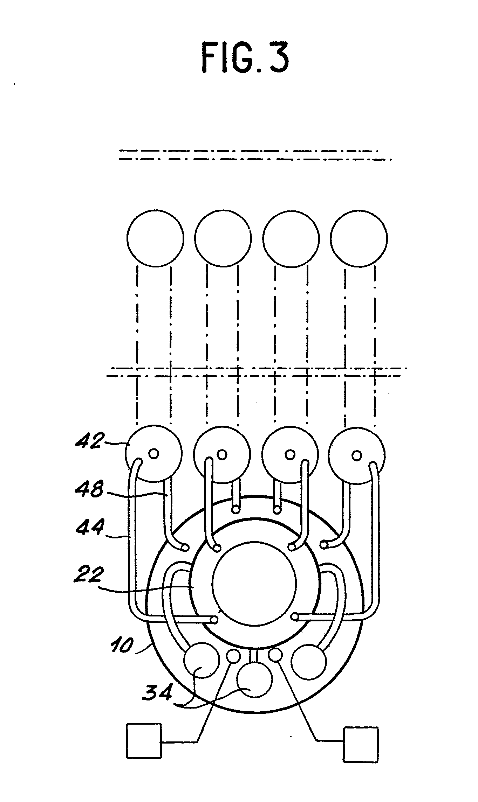

Conformément à la présente invention, on remarquera que le diamètre de la cuve principale 10 et celui de la dalle de fermeture 14 sont déterminées essentiellement par le diamètre de la cuve primaire 22 et par celui des pompes 34. En effet, par rapport aux réacteurs intégrés, l'encombrement des échangeurs ets remplacé par celui des canalisations d'entrée 44 et de sortie 48, beaucoup plus faible. Dans ces conditions, on sonstate que le diamètre de la cuve principale 10 est réduit fortement, de même que l'épaisseur de l'espace défini entre la cuve principale 10 et la cuve interne 22. Afin d'utiliser pleinement ces avantages, on a représenté schématiquement sur la figure 3 une vue de dessus d'un réacteur selon l'invention à symétrie de type diamétral. Dans ce réacteur, on voit qui la cuve primaire cylindrique 22 est décalée par rapport á l'axe de la cuve principale cylindrique 10 et que les pompes 34, au nombre de trois sur la figure, ont été rassemblées à l'opposé de la cuve primaire 22. Cette disposition, qui permet évidement de diminuer le diamètre de la cuve principale 10, peut aussi permettre de diminuer le nombre des pompes 34 en augmentant leur taille, tout en ne pénalisant pas le diamètre de la cuve principale. Il en résulte une réduction sensible du coût du réacteur. On a également représenté sur la figure 3, quatre échangeurs 42 et les canalisations d'entrée 44 et de sortie 48 par lesquelles ils communiquent avec les collecteurs chaud et froid respectivement. Comme on le voit sur la figure 3, les échangeurs 42 peuvent notamment être alignés d'un même côté du réacteur ce qui permet de réduire la longueur des circuits intermédiaires et/ou des tuyauteries eau-vapeur.

La structure du réacteur selon l'invention permet aussi de diminuer la hauteur de la cuve principale et celle de nombreux composants qui y sont contenus, notamment des barres de commande, du couvercle de l'instrumentation du coeur et des dispositifs de manutention du combustible non représentés. En effet, alors que ces hauteurs sont pénalisées d'une surhauteur due à la perte de charge des échangeurs dans une réacteur intégré, cette surhauteur n'existe pas dans le réacteur selon l'invention puisque les niveaux $N_0$, $N_1$ et $N_2$ occupés par le sodium en fonctionnement sont très inférieurs au niveau maximal de sodium $N_4$ atteint lors de la manutention.

Pour bénéficier pleinement de la possibilité de réduire la longueur de l'arbre des pompes 34, on peut être conduit comme on l'a indiqué notamment en se référant à la figure 2 à les faire fonctionner dénoyés de sodium sur leur face externe. Elles resteront toutefois toujours noyées lors de la manutention car le niveau $N_4$ est alors maximum et très voisin de la dalle 14.

Dans une première variante (non représentée), on peut alors disposer les pompes 34 de telle sorte qu'elles soient noyées lorsqu'elles sont à l'arrêt, les échangeurs 42 étant remplis (niveau de sodium $N_0$ dans la cuve), les pompes 34 étant dénoyés en fonctionnement, c'est-à-dire situées au-dessus du niveau $N_1$ de sodium dans le collecteur froid 28. Les pompes 34 peuvent alors être des pompes mécaniques de type connu, à surface libre à aspiration par le bas. Les fuites fonctionnelles de ces pompes (fuites au palier hydrostatique 199, fuites à travers les jeux permettant un démontage aisé 200) sont toujours soumises sur leur débouché interne à la pression de refoulement, à condition de prévoir des évents 74, jouant aussi le rôle de trop plein (figure 1 et 2) au-dessus du débouché externe de ces fuites. Ces évents 74 assurent la constitution d'un tampon de sodium (201 figure 2) qui noie le débouché externe des fuites. Ainsi, en fonctionnement normal, il n'y a aucun risque d'apsiration du gaz de couverture externe vers l'intérieur de la pompe, ce qui serait évidemment préjudiciable à son fonctionnement, mais surtout à celui du coeur du réacteur (effets thermique et neutronique). Si l'une des pompes 34 s'arrête, celles qui continuent à fonctionner créent une pression suffisante pour éviter une inversion du sens de l'écoulement des fuites fonctionnelles de la pompe arrêtée. Le volume du tampon de sodium dans les pompes doit évidemment être calculé en tenant compte du régime transitoire d'arrêt progressif des pompes sur inertie et du déplacement du niveau de sodium dans le collecteur froid de $N_1$ à $N_0$ qui lui correspond.

Dans le mode de réalisation de la figure 2, les pompes 34 peuvent aussi être dénoyées même lorsqu'elles sont à l'arrêt. Elles sont alors localisées partiellement ou totalement au-dessus du niveau de sodium $N_0$. Dans cette configuration lors de l'arrêt de la pompe, le tampon de noyage des fuites fonctionnelles risque de se vider progressivement, de sorte que du gaz peut pénétrer dans la pompe. Compte tenu de la position en point haut de la pompe sur la tuyauterie 38 reliant le collecteur froid 28 au coeur 20, il peut en résulter la formation d'une poche de gaz au droit de la pompe susceptible d'obturer totalement le débit, y compris celui engendré par la convection naturelle. Ce risque peut cependant être évité en faisant appel à un procédé connu qui consiste à alimenter le tampon du noyage des fuites fonctionnelles par un débit d'appoint fourni par un pompe indépendante des pompes principales et de débit modéré. Cette pompe indépendante peut être constituée notamment par la pompe électromagnétique alimentant le système de purification du sodiun (piège froid).

Les pompes 34 peuvent aussi être constituées par des pompes mécaniques à surface libre à aspiration par le haut, pompes qui sont également bien connues des spécialistes de la technique. Comme dans les pompes à aspiration par le bas, ces pompes peuvent être noyées à l'arrêt ou non. Si la pompe est noyée sur sa face extérieure, tout se passage pratiquement comme dans le cas d'un réacteur intégré (ce cas est représenté figure 1 avec une pompe du type à aspiration par le bas). En revanche, si l'extérieur de la pompe est dénoyé, il peut y avoir entrée du gaz extérieur lors du fonctionnement de la pompe.

Afin de remédier à cet inconvénient, on a représenté sur la figure 4 un aménagement particulier d'une pompe mécanique à aspiration par le haut destinée à être dénoyée lorsque la pompe est en fonctionnement. On voit notamment sur cette figure la tuyauterie d'aspiration 36 qui constitue en même temps la calandre extérieure de la pompe, les orifices d'entrée 78 du sodium froid à l'intérieur de la pompe proprement dite, le rotor 80 commandé par son arbre 82, le stator 84, et la tuyauterie de refoulement latérale du sodium 38. Conformément aux aménagements représentés sur la figure 4, une canalisation de dérivation 86 permet d'alimenter le tampon de sodium 88 formé au-dessus de la pompe à l'intérieur de la virole 90 entourant l'arbre de commande par un petit débit de sodium prélevé à la sortie de la pompe. Plus précisément, ce petit débit de sodium est prélevé sur le débit principal soit dans la tuyauterie de refoulement 38, soit directement à la sortie de la pompe.

La tuyauterie 86 débouche préférentiellement à un niveau supérieur au niveau minimal $N_0^*$ que la surface libre du tampon 88 doit occuper pour assurer un noyage suffisant des fuites fonctionnelles 200 en marche normale. Ce niveau $N_0^*$ est avantageusement détecté par une sonde de mesure de niveau (non représentée). Au-dessus du débouché de la canalisation 86, et comme dans les pompes à aspiration par le bas, on prévoit des évents 74 dans la virole 90. Ces évents assurent un équilibrage des pressions de gaz régnant au-dessous du tampon 88 et dans la couverture de gaz 58 du réacteur. Certains de ces évents 74 jouent de plus le rôle de tropplein pour le sodium contenu dans la virole 90.

La localisation du débouché de la tuyauterie 86 au-dessus du niveau $N_0^*$ permet d'empêcher que le tampon 88 ne soit aspiré trop rapidement en cas d'arrêt simultané de toutes les pompes. En effet, si tel n'était pas le cas, le sodium contenu dans le tampon 88 serait alors aspiré simultanément à la fois par les fuites fonctionnelles 200 et par la tuyauterie 86 alors que celle-ci n'aspire que le gaz de couverture dans la configuration décrite. De plus, afin d'éviter que le gaz ainsi aspiré ne pénètre dans la tuyauterie principale 38, il est préférable de localiser le piquage amont de la tuyauterie 86 sur cette tuyauterie 38 en dessous du niveau $N_0$ et même, de préférence pour avoir toute garantie au cours des régimes transitoires, en dessous du niveau $N_1$. Ainsi, l'aspiration du gaz de couverture par la tuyauterie 86 est limitée à l'établissement d'un équilibre hydrostatique correspondant à la descente du sodium dans la tuyauterie 86 jusqu'au niveau $N_0$.

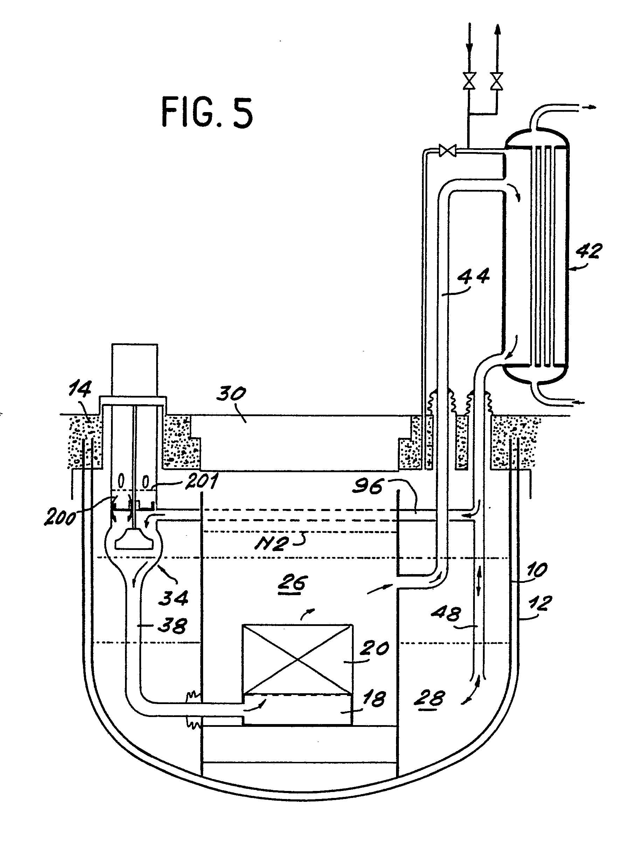

Dans le cas où la pompe 34 est implantée au-dessus du niveau $N_0$, le tampon de sodium 88 risque cependant d'être vidangé au bout d'un certain temps après l'arrêt des pompes. Il peut alors se produire une pénétration du gaz de couverture dans la pompe avec les inconvénients déjà cités. Pour remédier à cet inconvénient, on peut faire appel du procédé connu du débit d'appoint de sodium par une pompe auxiliaire acheminée dans la virole 90 par une tuyauterie 94 (figure 4) comme on l'a déjà indiqué pour les pompes à aspiration par le bas. On peut aussi faire appel à un procédé spécifique aux pompes à aspiration par le haut, mis en oeuvre dans le réacteur représenté schématiquement sur la figure 5. Ce procédé consiste à relier directement l'échangeur 42 à la pompe 34 sans passer par le collecteur froid 28 au moyen d'une tuyauterie 96. Plus précisément, la tuyauterie 96 relie la tuyauterie de sortie 48 de l'échangeur directement aux orifices d'entrée 78 de la pompe 34 en évitant tout point haut le long de la tuyauterie 96. La tuyauterie 96 remplace alors la tuyauterie d'aspiration 36 supprimée dans cette configuration. Grâce à cette disposition, les bulles de gaz qui pénètrent dans le corps de la pompe 34 ne s'y accumulent pas mais remontent par gravité le long de la tuyauterie 96 et de la tuyauterie 48 pour dégazer finalement au point haut de l'échangeur 42. Les moyens de régulation du niveau au point haut de l'échangeur agissent alors pour compenser la tendance à l'abaissement du niveau $N_3$ de ce point haut.

Enfin, quels que soient le type de pompe utilisé et le niveau de la pompe dans la cuve principale, si les moyens définis précédemment pour empêcher la formation d'une poche de gaz sont défaillants ou ne sont pas utilisés, il est toujours possible de déclencher la vidange des circuits extérieurs par l'ouverture des vannes 62. On se trouve alors dans la situation de refroidissement à l'arrêt du réacteur qui est parfaitement sûre. On peut noter en outre que si on avait laissé s'établir une poche de gaz dans la pompe avant vidange des circuits extérieurs, celle-ci aurait rapidement la possibilité de se résorber après vidange (niveau de sodium $N_4$ atteint dans la cuve) par bullage à travers les orifices des fuites fonctionnelles 200 (figure 1, 2, 4, 5 ou 6).

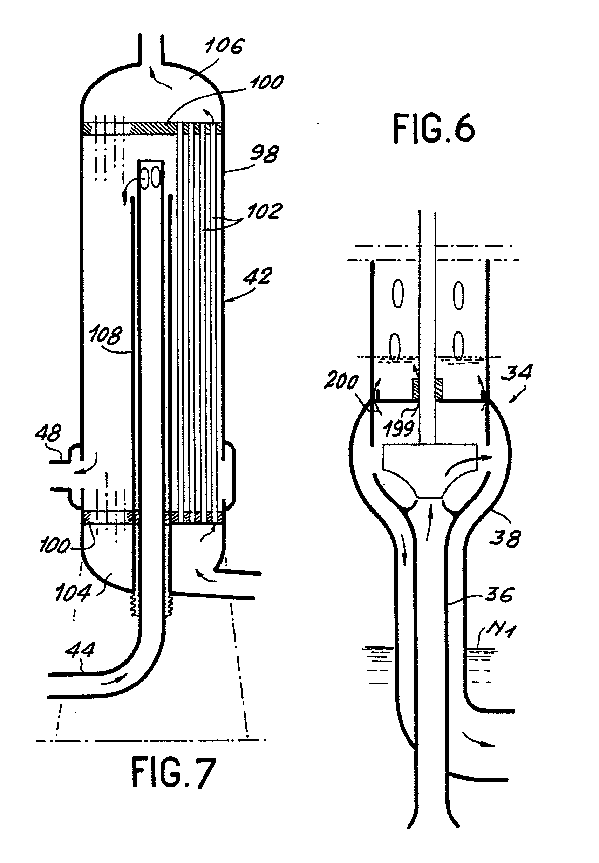

Lorsque les pompes 34 sont dénoyées, un risque accidentel de pénétration du gaz de couverture à l'aspiration de la pompe peut également résulter d'une brèche de la tuyauterie d'aspiration 36 dans la zone où elle est baignée extérieurement par le gaz de couverture 58. On a représenté sur la figure 6 en prenant pour exemple, car il est particulièrement avantageux, le cas d'une pompe à aspiration par la bas, une disposition particulière permettant de remédier à cet inconvénient. Cette disposition consiste à disposer la tuyauterie d'aspiration 36 à l'intérieur de la tuyauterie de refoulement 38 de la pompe sur toute la hauteur comprise entre la pompe 34 et le niveau $N_1$ du sodium dans le collecteur froid en fonctionnement normal. Grâce à cette disposition, en cas de brèche de la tuyauterie d'aspiration interne 36, il n'y a pas aspiration du gaz de couverture mais dérivation d'une partie du débit de la pompe par la brèche. Si une brèche se produit sur la tuyauterie de refoulement externe 38, il n'y a pas non plus entrée de gaz en fonctionnement normal, car la brèche éjecte alors du sodium sous pression.

En plus des avantages précédemment mentionnés de la présente invention, on peut indiquer notamment que la perte de charge accrue des circuits extérieurs, qui se traduit par la dénivellation entre les niveaux de sodium $N_1$ et $N_2$ peut être mise à profit pour que que la cuve interne 22 définissant le collecteur chaud 26 soit baignée extérieurement par le gaz de couverture. On évite ainsi les baffles thermiques coûteux qui doivent nécessairement être utilisés dans les réacteurs intégrés afin de limiter les gradients thermiques entre les collecteurs chaud et froid. Simultanément, la dénivellation entre les niveaux $N_1$ et $N_2$ autorisée par l'invention permet au gaz de couverture 58 de baigner la cuve principale 10 sur une grande hauteur en fonctionnement normal. La cuve principale se trouve ainsi tout naturellement calorifugée et donc maintenue à une température basse sans nécessiter le système complexe de refroidissement utilisé dans les réacteurs intégrés.

De plus, conformément à l'invention, la portion à haute pression du circuit primaire est courte et doublement confinée dans la cuve principale comme dans les réacteurs intégrés, alors que la portion de circuit extérieur est au contraire à très basse pression puisqu'elle est située on altitude (effet de la pression statique) et à l'amont des pompes (effet de la répartition des pertes de charge). Ces caractéristiques sont particulièrement avantageuses par rapport à celles des réacteurs à boucles dans lesquels une grande longueur de circuits extérieurs, comprenant généralement l'échangeur, est directement soumise à la pression de refoulement des pompes (de l'ordre d'une dizaine de bars), de sorte que les risques de brèches et les conséquences d'une fuite sont augmentés, et dans lesquels, pour éviter une pénétration du sodium primaire radioactif selon le sodium secondaire en gas de brèces dans l'échangeur, on est amené à pressuriser le circuit secondaire à une pression (par exemple de dix bars) supérieure à celle qui règne dans l'échangeur au primaire.

On a représenté sur la figure 7 une variante de réalisation d'un échangeur prévu pour être utilisé dans le réacteur selon l'invention, cet échangeur permettant de limiter encore davantage la longueur développée des tuyauteries extérieures à la cuve principale 10. On voit sur cette figure la virole cylindrique externe 98 de l'échangeur, les plaques à tubes supérieure et inférieure 100 entre lesquelles sont fixés les tubes 102 du faisceau de tubes dans lequel circule le sodium secondaire (dans le cas d'un échangeur sodium/sodium) et les collecteurs d'entrée 104 et de sortie 106 du sodium secondaire. Dans cette variante, la tuyauterie 44 pénètre dans l'échangeur 42 par le bas de dernier et définit à l'intérieur de la virole 98 une cheminée qui débouche à proximité de la plaque à tubes supérieure 100. Un baffla thermique 108 est disposé de préférence autour de la tuyauterie 44 à l'intérieur de l'échangeur 42. La sortie du sodium primaire refroidi s'effectue de façon classique par la tuyauterie 48 située à proximité immédiate de la plaque à tubes inférieure 100. La localisation d'une partie de la tuyauterie d'entrée 44 à l'intérieur de l'échangeur permet d'éviter de munir cette tuyauterie 44 d'une double enveloppe sur une partie importante de sa longueur.

On remarquera que le réacteur selon l'invention est d'autant plus avantageux que la cuve principale 10 a un diamètre plus proche de celui de la cuve primaire 22. Cette caractéristique peut être utilisée en augmentant un peu le diamètre de la cuve primaire 22 afin de libérer de la place pour y implanter un stockage temporaire de combustible irradié déchargé du coeur. Ce stockage permet de faire décroître la puissance résiduelle des assemblages combustibles de façon suffisante pour que ce dernier soit retiré du réacteur directement en gaz et non sous sodium. On peut ainsi envisager de supprimer le coûteux stockage intermédiaire en sodium réalisé habituellement dans un barillet indépendant de la cuve principale. La machine de chargement/déchargement qui est habituellement associée au transfert du combustible entre la cuve principale et le barillet doit pouvoir également bénéficier de cette simplification.

On notera enfin que la présente invention permet également d'envisager favorablement la suppression des circuits intermédiaires en sodium, alors que les réacteurs de type intégrés excluent pratiquement cette éventualité dans l'état actuel des connaissances.

Bien entendu, on comprendra que l'invention n'est pas limitée aux modes de réalisation qui viennent d'être décrits à titre d'exemple mais en couvre toutes les variantes. Ainsi, on voit par exemple sur la figure 5 que la tuyauterie d'entrée 44 acheminant le métal liquide du collecteur chaud 26 vers l'échangeur 42 peut être directement piquée sur la paroi latérale de la cuve primaire 22.

L'ensemble des variantes décrites et regroupées pour simplification sur les figures 2—3—5—6—7 peuvent être mises en oeuvre, isolément ou combinées entre elles différemment, sans que l'on sorte du cadre de la présente invention.

**Revendications**

1. Réacteur nucléaire refroidi par un métal liquide, comprenant une cuve principale (10) obturée par une dalle de fermeture (14), ladite cuve contenant du métal liquide (24) surplombé par une couverture de gaz inerte (58), le coeur (20) du réacteur étant placé dans une cuve primaire (22) intégrée dans la cuve principale, de telle sorte que la cuve primaire constitue à la sortie du coeur un collecteur chaud (36) pour le métal liquide et que l'espace défini entre la cuve principale et la cuve primaire constitue un collecteur froid (28) pour le métal liquide, au moins un échangeur de chaleur (42) étant alimenté par le métal liquide contenue dans le collecteur chaud sous l'action d'au moins une pompe primaire (34) disposée dans la cuve principale, ledit échangeur (42) étant situé hors de la cuve principale (10), et communiquant avec le collecteur chaud (26) par au moins une canalisation d'entrée (44) et avec le collecteur froid (28) par au moins une canalisation de sortie (48), caractérise en ce que ledit échangeur (42) est entièrement situé à un niveau supérieur à celui de la dalle de fermeture, et de telle sorte que l'échangeur et lesdites canalisations sont totalement vidangeables par gravité dans la cuve principale, la partie supérieure dudit échangeur (42) étant remplie par une couverture de gaz inerte (60) qui communique avec la couverture de gaz inerte (58) de la cuve principale par au moins une canalisation d'équilibrage de pression de gaz (56) dans laquelle est disposée au moins une vanne (62) fermée en fonctionnement normal, la couverture de gaz inerte de la cuve principale étant pressurisée de telle sorte que ledit échangeur est rempli de métal liquide par contre-pression, l'ouverture de ladite vanne (62) commandant la vidange des circuits extérieurs (échangeur (42) canalisations d'entrée (44) et de sortie (48) correspondantes) dans la cuve principale (10).

2. Réacteur nucléaire selon la revendication 1, caractérisé en ce que la cuve primaire (22) présente un bord supérieur (32) situé au-dessus des niveaux de métal liquide ($N_2$, $N_1$) dans les collecteurs chaud (26) et froid (28) lorsque les circuits extérieurs sont remplis de métal liquide, et en ce que le niveau du métal liquide ($N_4$) dans la cuve principale est situé au-dessus dudit bord supérieur lorsque le ou les échangeurs (42) sont vidangés simultanément par ouverture de la ou desdites vannes, de façon à permettre une circulation du métal liquide interne à la cuve principale (10) à travers le coeur puis entre les collecteurs chaud et froid, en passant par le dessus du rebord supérieur de la cuve primaire.

3. Réacteur nucléaire selon la revendication 2, caractérisé en ce qu'il comprend au moins un échangeur de refroidissement à l'arrêt (68) disposé dans le collecteur froid (28) à un niveau supérieur au niveau ($N_1$) du métal liquide dans ce collecteur lorsque les circuits extérieurs sont remplis de métal liquide et à un niveau inférieur au niveau ($N_4$) de métal liquide dans la cuve principale lorsque les circuits sont vidangés simultanément.

4. Réacteur nucléaire selon l'une quelconque des revendications 2 ou 3, caractérisé en ce que la ou les pompes primaires (34) sont disposées dans le collecteur froid (28) à un niveau supérieur au niveau ($N_1$) de métal liquide dans ce collecteur lorsque les circuits extérieurs sont pleins de métal liquide et à un niveau inférieur au niveau ($N_4$) de métal liquide dans la cuve principale lorsque les circuits extérieurs sont vidangés simultanément.

5. Réacteur nucléaire selon la revendication 4, caractérisé en ce que la ou les pompes primaires (34) présentent chacune une tuyauterie d'aspiration (36) qui plonge dans le métal liquide contenu dans le collecteur froid et une tuyauterie de refoulement (38) qui débouche dans un sommier (18) portant le coeur du réacteur.

6. Réacteur nucléaire selon la revendication 5, caractérisé en ce que la tuyauterie d'aspiration (36) est disposée à l'intérieur de la tuyauterie de refoulement (38) sur toute la hauteur comprise entre la pompe correspondante et le niveau ($N_1$) de métal liquide dans le collecteur froid (28) lorsque les circuits extérieurs sont pleins de métal liquide et lorsque les pompes (34) fonctionnent.

7. Réacteur nucléaire selon la revendication 4, caractérisé en ce que la ou les pompes primaires (34) présentent chacune une tuyauterie d'aspiration (96) qui débouche dans la canalisation de sortie (48) de l'échangeur correspondant, et une tuyauterie de refoulement (38) qui débouche dans un sommier (18) portant le coeur du réacteur, ladite tuyauterie d'aspiration (96) ne présentant aucun point haut.

8. Réacteur nucléaire selon l'une quelconque des revendications 4 à 7, caractérisé en ce que la ou les pompes primaires (34) sont à aspiration par le haut et en ce qu'au moins une tuyauterie de dérivation (86) met en communication la tuyauterie de refoulement (38) avec la partie supérieure de la pompe afin de définir dans cette dernière un tampon (88) de métal liquide par prélèvement d'un petit débit de métal liquide dans la tuyauterie de refoulement.

9. Réacteur nucléaire selon la revendication 8, caractérisé en ce que ladite tuyauterie de dérivation (86) débouche dans la partie supérieure de la pompe (34) à un niveau supérieur au niveau minimal ($N_0^*$) de la surface libre du tampon (88) de métal liquide contenu dans la pompe.

10. Réacteur nucléaire selon l'une quelconque des revendications 8 ou 9, caractérisé en ce que ladite tuyauterie de dérivation (86) débouche dans la tuyauterie de refoulement (38) à un niveau inférieur au niveau ($N_0$) du métal liquide dans la cuve principale lorsque les circuits extérieurs sont pleins de métal liquide et lorsque la ou les pompes (34) sont arrêtées simultanément.

11. Réacteur nucléaire selon l'une quelconque des revendications précédentes, caractérisé en ce que le ou les échangeurs (42) comprennent une virole externe (98) dans laquelle est dispose un faisceau de tubes (102) dans lequel circule un fluide secondaire, le canalisation d'entrée (44) correspondante pénétrant dans l'échangeur à l'extrémité inférieure de ce dernier et débouchant dans la virole externe à proximité de l'extrémité supérieure du faisceau de tubes.

12. Réacteur nucléaire selon l'une quelconque des revendications précédentes, caractérisé en ce que le ou les échangeurs de chaleur (42) ainsi que les canalisations d'entrée (44) et de sortie (48) sont équipés au moins en partie d'une double enveloppe (79) définissant un espace intermédiaire (72) rempli de gaz inerte, ledit espace intemédiaire communiquant avec la couverture de gaz inerte (58) de la cuve principale (10).

13. Réacteur nucléaire selon l'une quelconque des revendications 1 à 11, caractérisé en ce que le ou les échangeurs de chaleur (42) ainsi que les canalisations d'entrée (44) et de sortie (48) sont équipés au moins en partie d'une double enveloppe (70) définissant un espace intermédiaire (72) rempli de gaz inerte, ledit espace intermédiaire communiquant avec un espace défini entre la cuve principale (10) et une cuve de sécurité (12) doublant la cuve principale à l'extérieur de celle-ci.

**Patentansprüche**

1. Flüssigmetallgekühlter Kernreaktor mit einem Hauptbehälter (10), der mit einer Abschlußplatte (14) verschlossen ist und von einer Schicht aus Inertgas (58) überlagertes Flüssigmetall (24) enthält, wobei der Reaktorkern (20) in einem Primärbehälter (22) angeordnet ist, der in dem Hauptbehälter derart integriert ist, daß der Primärbehälter an Ausgang des Kernes einen warmen Sammler (26) für das Flüssigmetall und der zwischen dem Hauptbehälter und dem Primärbehälter begrenzte Raum einen kalten Sammler (28) für das Flussigmetall bildet, wenigstens einem Wärmetauscher (42), der durch die Wirkung wenigstens einer in dem Hauptbehälter angeordneten Primärpumpe (34) mit dem in dem warmen Sammler enthaltenen Flüssigmetall gespeist wird, wobei sich der Wärmetauscher (42) außerhalb des Hauptbehälters (10) befindet und über wenigstens eine Zuführleitung (44) mit dem heißen Sammler (26) und über wenigstens eine Auslaßleitung mit dem kalten Sammler (28) in Verbindung steht, dadurch gekennzeichnet, daß sich der Wärmetauscher (42) vollständig auf einer Höhe über derjenigen der Abschlußplatte befindet und zwar derart, daß der Wärmetauscher und die Leitungen vollständig durch die Schwerkraft in den Hauptbehälter entleerbar sind, daß der obere Abschnitt des Wärmetauschers (42) mit einer Schicht aus Intergas (60) gefüllt ist, die mit der Schicht aus Inert-gas (58) des Hauptbehälters über wenigstens eine Gasdruckausleichsleitung (56) verbunden ist, in der wenigstens ein beim normalen Funktionieren geschlossenes Ventil (62) angeordnet ist, daß die Schicht aus Inertgas des Hauptbehälters derart unter Druck steht, daß der Wärmetauscher durch Gegendruck mit Flüssigmetall gefüllt ist, und daß das Öffnen des Ventils (62) das Entleeren der äußeren Kreisläufe (Wärmetauscher (42), entsprechende Leitungen zum Zuführen (44) und für den Auslaß (48)) in den Hauptbehälter (10) steuert.

2. Kernreaktor nach Anspruch 1, dadurch gekennzeichnet, daß der Primärbehälter (22) einen oberen Rand (32) aufweist, der sich oberhalb des Flüssigmetallpegels ($N_2$, $N_1$) in dem warmen (26) und kalten (28) Sammler befindet, wenn die äußeren Kreisläufe mit Flüssigmetall gefüllt sind, und daß sich der Pegel des Flüssigmetalls ($N_4$) in dem Hauptbehälter oberhalb des oberen Randes befindet, wenn der oder die Wärmetauscher (42) gleichzeitig durch Öffnen des Ventils oder der Ventile geleert ist, bzw. sind, um innerhalb des Hauptbehälters (10) eine Zirkulation des Flüssigmetalls durch den Kern hindurch und dann zwischen dem warmen und dem kalten Sammler zu erlauben, wobei diese über den oberen Rand des Primärbehälters hinweg verläuft.

3. Kernreaktor nach Anspruch 2, dadurch gekennzeichnet, daß er wenigstens einen Wärmetauscher zum Kühlen (68) beim Stillstand umfaßt, der in dem kalten Sammler (28) auf einer Höhe oberhalb des Flüssigmetallpegels ($N_1$) in diesem Sammler, wenn die äußeren Kreisläufe mit Flüssigmetall gefüllt sind, und auf einer Höhe unterhalb des Flüssigmetallpegels ($N_4$) in dem Hauptbehälter angeordnet ist, wenn die Kreisläufe gleichzeitig entleert sind.

4. Kernreaktor nach Anspruch 2 oder 3, dadurch gekennzeichnet, daß die Primärpumpe oder die Primärpumpen (34) in dem kalten Sammler (28) auf einer Höhe oberhalb des Flüssigmetallpegels ($N_1$) in diesem Sammler, wenn die äußeren Kreisläufe mit Flüssigmetall gefüllt sind, und auf einer Höhe unterhalb des Flüssigmetallpegels ($N_4$) in den Hauptbehälter angeordnet ist bzw. sind, wenn die äußeren Kreisläufe gleichzeitig geleert sind.

5. Kernreaktor nach Anspruch 4, dadurch gekennzeichnet, daß die Primärpumpe oder die Primärpumpen (34) jeweils ein Ansaugrohr (36), welches in das in dem kalten Sammler enthaltene Flüssigmetall taucht, und eine Förderleitung (38) aufweist bzw. aufweisen, welche in einen Träger (18) mündet, der den Reaktorkern trägt.

6. Kernreaktor nach Anspruch 5, dadurch gekennzeichnet, daß das Ansaugrohr (36) im Inneren der Förderleitung (38) über dessen gesamte Höhe zwischen der entsprechenden Pumpe und dem Flussigmetallpegel ($N_1$) in dem kalten Sammler (28) angeordnet ist, wenn die äußeren Kreisläufe mit Flüssigmetall gefüllt sind und die Pumpen (34) arbeiten.

7. Kernreaktor nach Anspruch 4, dadurch gekennzeichnet, daß die Primärpumpe oder die Primärpumpen (34) jeweils ein Ansaugrohr (96), welches in die Auslaßleitung (48) des entsprechenden Wärmetauschers mündet, und eine Förderleitung (38) aufweist bzw. aufweisen, welche in einen Träger (18) mündet, der den Reaktorkern tragt, wobei die Ansaugleitung (96) keinen hohen Punkt aufweist.

8. Kernreaktor nach einem der Ansprüche 4 bis 7, dadurch gekennzeichnet, daß die Primärpumpe oder die Primärpumpen (34) oben ansaugend ist bzw. sind und daß wenigstens eine Zweigleitung (86) die Förderleitung (38) mit dem oberen Abschnitt der Pumpe verbindet, um in letzterer einen Pfropfen (88) aus Flüssigmetall durch Entnehmen einer kleinen Strömung von Flüssigmetall aus der Förderleitung zu bestimmen.

9. Kernreaktor nach Anspruch 8, dadurch gekennzeichnet, daß die Zweigleitung (86) in dem oberen Abschnitt per Pumpe (34) auf einer Höhe oberhalb des minimalen Pegels ($N_0^*$) der freien Oberfläche des Pfropfens (88) aus Flüssigmetall mündet, der in der Pumpe enthalten ist.

10. Kernreaktor nach Anspruch 8 oder 9, dadurch gekennzeichnet, daß die Zweigleitung (86) (86) in die Förderleitung (38) auf einer Höhe unterhalb des Flüssigmetallpegels ($N_0$) des Hauptbehälters mündet, wenn die äußeren Kreisläufe mit Flüssigmetall gefüllt sind und die Pumpe oder die Pumpen (34) gleichzeitig stillstehen.

11. Kernreaktor nach einem der vorhergehenden Ansprüche, dadurch gekennzeichnet, daß der oder die Wärmetauscher (42) einen äußeren Mantel (98) aufweist bzw. aufweisen, in dem ein Rohrbündel (102) angeordnet ist, in welchem ein Sekundärfluid strömt, wobei die entsprechende Zuführleitung (44) in den Wärmetauscher an dessen unterem Ende eintritt und in den äußeren Mantel nahe dem oberen Ende des Rohrbündels mündet.

12. Kernreaktor nach einem der vorhergehenden Ansprüche, dadurch gekennzeichnet, daß der oder die Wärmetauscher (42) sowie die Zuführleitung (44) und die Auslaßleitung (48) wenigstens teilweise mit einem zweiten Mantel (70) versehen sind, welcher einen mit Inertgas gefüllten Zwischenraum (62) begrenzt, wobei der Zwischenraum mit der Schicht aus Inertgas (58) des Hauptbehälters (10) in Verbindung steht.

13. Kernreaktor nach einem der Ansprüche 1 bis 11, dadurch gekennzeichnet, daß der oder die Wärmetauscher (42) sowie die Zuführleitung (44) und die Auslaßleitung (48) wenigstens teilweise mit einem zweiten Mantel (70) versehen sind, der einen mit Inertgas gefüllten Zwischenraum (72) begrenzt, wobei der Zwischenraum mit einem Raum in Verbindung steht, der zwischen dem Hauptbehälter (10) und einem Sicherheitsbehälter (12) festgelegt ist, welcher den Hauptbehälter außerhalb desselben umgibt.

**Claims**

1. Liquid metal-cooled nuclear reactor, comprising a main tank (10) closed by a slab (14), said tank containing liquid metal (24) under an inert gas blanket (58), the reactor core (20) being located within an integral primary tank (22) within the main tank, the primary tank being constructed to comprise a hot liquid metal manifold (26) at the outlet of the core, the space defined between the main tank and the primary tank forming a cold liquid metal manifold (28), at least one heat exchanger (42) being fed by liquid metal from the cold manifold by means of at least one primary pump (34) located within the main tank, said exchanger (42) being located outside the main tank (10) and communicating with the hot manifold (26) by at least one inlet duct (44) and with the cold manifold (28) by at least one outlet duct (48), characterized in that said exchanger (42) is located entirely at a level above the slab, such that the exchanger and said ducts are totally emptyable by gravity into the main tank, the upper part of said exchanger (42) being filled by an inert gas blanket (60) which communicates with the inert gas blanket (58) of the main tank through at least one gas pressure-equilibration conduit (56) in which is located at least one normally-closed valve (62), the inert gas blanket of the main tank being pressurized whereby said exchanger is filled with liquid metal under pressure, openings of said valve (62) commanding emptying of the external circuits (exchanger (42) inlet (44) and outlet (48) ducts) into the main tank (10).

2. Nuclear reactor according to Claim 1, characterized in that the primary tank (22) has an upper edge (32) located above the levels of liquid metal $(N_2, N_1)$ in the hot (26) and cold (28) manifolds when the external circuits are filled with liquid metal, and in that the level of liquid metal $(N_4)$ in the main tank is located above said upper rim when the exchanger or exchangers (42) are simultaneously emptied by opening said valve or valves, whereby to allow internal circulation of liquid metal from the main tank (10) through the core and between the hot and cold manifolds, passing over the upper edge of the main tank.

3. Nuclear reactor according to Claim 2, characterized in that it comprises at least one exchanger (68) for emergency cooling, located in the cold manifold (28) at a level above the liquid metal level $(N_1)$ in said collector when the external circuits are filled with liquid metal, and at a level below the liquid metal level $(N_4)$ in the main tank when the circuits are simultaneously emptied.

4. Nuclear reactor according to either of Claims 2 or 3, characterized in that the primary pump or pumps (34) are located in the cold manifold (28) at a level above the liquid metal level $(N_1)$ in said conductor when the external circuits are full of liquid metal and at a level below the liquid metal level $(N_4)$ of the main tank when the external circuits are simultaneously emptied.

5. Nuclear reactor according to Claim 4, characterized in that the primary pump or pumps (34) each have an inlet conduit (36) dipping into liquid metal contained in the cold manifold, and an outlet conduit (38) opening into a support (18) carrying the reactor core.

6. Nuclear reactor according to Claim 5, characterized in that the inlet conduit (36) is located inside the outlet conduit (38) over the whole of its height between the corresponding pump and the

liquid metal level $(N_1)$ in the cold manifold (28) when the external circuits are full of liquid metal and when pumps (34) are in operation.

7. Nuclear reactor according to Claim 4, characterized in that the primary pump or pumps (34) each have an inlet conduit (96) which opens into the outlet duct (48) of the corresponding exchanger, and an outlet conduit (38) which opens into a support (18) carrying the reactor core, said inlet conduit (96) having no high point.

8. Nuclear reactor according to any one of Claims 4 to 7, characterized in that the primary pump or pumps (34) are fed from above, and in that at least one recycle conduit (86) provides communication between the outlet conduit (38) and the upper part of the pump whereby to provide within the latter a liquid metal buffer (88) by diverting a small flow of liquid metal from the outlet conduit.

9. Nuclear reactor according to Claim 8, characterized in that said recycled conduit (86) opens into the upper part of the pump (34) at a level above the minimal level $(N_0^*)$ of the free surface of the liquid metal buffer (88) contained in the pump.

10. Nuclear reactor according to either of Claims 8 or 9, characterized in that said recycled conduit (86) opens into the outlet conduit (38) at a level below the liquid metal level $(N_0)$ in the main tank when the external circuits are full of liquid metal and when the pump or pumps (34) are simultaneously stopped.

11. Nuclear reactor according to any one of the preceding Claims, characterized in that the exchanger or exchangers (42) comprise an external shell (98) within which is disposed a tube bundle (102) within which a secondary fluid circulates, the corresponding inlet duct (44) entering the exchanger at its lower end and opening into the external shell near the upper end of the tube bundle.

12. Nuclear reactor according to any one of the preceding Claims, characterized in that the heat exchanger or exchangers (42) as well as the inlet (44) and outlet ducts (48) have at least in part a double envelope (70) defining an intermediate space (72) filled with inert gas, said intermediate space communicating with the inert gas (58) of the main tank (10).

13. Nuclear reactor according to any one of Claims 1 to 11, characterized in that the heat exchanger or exchangers (42) as well as the inlet (44) and outlet ducts (48) are provided at least in part with a double envelope (70) defining an intermediate space (72) filled with inert gas, said intermediate space communicating with a space defined between the main tank (10) and a security confinement (12) external to and conforming with the main tank.

FIG.1

# FIG.2

# FIG.3

FIG.4

# FIG. 5

FIG.6

FIG.7